# EUROPÄISCHE PATENTANMELDUNG

(11) **EP 0 645 710 A2**
(43) Veröffentlichungstag der Anmeldung: **29.03.1995**
(21) Anmeldenummer: 94250191.7
(22) Anmeldetag: 27.07.1994
(51) Int. Cl.: G06F 11/16

(54) **Verfahren zur Funktionsprüfung signaltechnisch nicht sicherer Speicher für mindestens zweikanalig abgespeicherte Nutzdaten und Einrichtung zur Durchführung des Verfahrens**

(30) Priorität: 17.09.1993 DE 4332144
(71) Anmelder: SIEMENS AKTIENGESELLSCHAFT, D-80333 München (DE)
(72) Erfinder: Forstreuter, Horst, Dipl.-Ing., D-38104 Braunschweig (DE); Weitner-von Pein, Achim, Dipl.-Ing., D-38126 Braunschweig (DE)

(57) **Zusammenfassung**

Bei elektronischen Speichern, deren Datenbestand mindestens partiell möglicherweise über größere Zeiträume nicht verändert wird, muß damit gerechnet werden, daß einzelne Speicherzellen im Laufe der Zeit kippen. Werden die Speicher in sicherheitskritischen Anwendungen eingesetzt, so sind diese Fehler kenntlich zu machen. Für Anlagen, in denen Daten zweikanalig vorliegen, sieht die Erfindung vor, daß über die in den beiden Speichern oder Speicherbereichen vorhandenen Nutzdaten in vorgegebenen zeitlichen Mindestabständen Prüfdaten gebildet und diese Prüfdaten dann miteinander verglichen werden. Die Prüfdaten umfassen nur einige wenige Bytes, die miteinander verglichen werden können, ohne daß dadurch die Verarbeitung der Nutzdaten merklich beeinträchtigt wird. Für sicherheitskritische Anwendungen soll der Datenvergleich in einem signaltechnisch sicheren Rechner oder in einem signaltechnisch sicheren Vergleicher stattfinden, für nicht sicherheitskritische Anwendungen genügt ein Vergleich zwischen den einzelnen Rechnern oder ein externer Vergleich in einem nicht sicheren Rechner.

## Beschreibung

Die Erfindung bezieht sich auf ein Verfahren nach dem Oberbegriff des Patentanspruches 1.

Für die Steuerung insbesondere umfangreicher Prozesse werden in zunehmendem Maße Mikrocomputer eingesetzt. Die von diesen Mikrocomputern erarbeiteten Prozeßsteuerkommandos werden von den Mikrocomputern in Ausgaberegistern abgelegt und von dort gegebenenfalls über Ausgabeschaltmittel an die Prozeßelemente ausgegeben. In entsprechender Weise werden den Prozeß betreffende Meldungen über Eingabeschaltmittel in Eingaberegistern der Mikrocomputer abgelegt und durch die Mikrocomputer von dort eingelesen.

Bei der heutigen Technik sind die Ein/Ausgaberegister üblicherweise durch hochintegrierte Schaltkreise dargestellt, deren mögliches Ausfallverhalten nicht umfassend bekannt ist und aus Aufwandsgründen noch nicht durch Analyse ermittelt werden kann. Ausfälle im Funktionsverhalten derartiger Register lassen sich durch Prüfprozeduren erkennen, in denen die einzelnen Speicherplätze der Register im Wechsel mit Prüfdaten unterschiedlicher Wertigkeit belegt werden; dabei wird geprüft, ob die entsprechenden Speicherplätze der Register diese Prüfdaten tatsächlich aufnehmen oder nicht (Handbuch "Sichere Auslegung von Steuerungen für Maschinen und Anlagen" zum Seminar der VDI/VDE-Gesellschaft Meß- und Regeltechnik am 2. und 3.10.1984 in Düsseldorf). Durch diesen Prüfvorgang ist die Datenverarbeitungsanlage, die die ein- bzw. auszugebenden Daten verarbeitet bzw. erarbeitet, zeitlich beansprucht. Dort wo es darum geht, nicht nur einzelne Register auf ordnungsgerechtes Funktionsverhalten zu überprüfen sind, sondern wo es darum geht, umfangreiche Speicher dahingehend zu überwachen, daß sich der Speicherinhalt auch über längere Zeit hinweg durch irgendwelche Einflüsse nicht unbemerkt verändert, können derartige Prüfprozeduren regelmäßig nicht durchgeführt werden.

Bei sicherheitsrelevanten Prozeßsteuerungen werden die zu behandelnden Daten regelmäßig mindestens zweikanalig verarbeitet und es wird durch Vergleich festgestellt, ob die in den beiden Kanälen jeweils verarbeiteten Daten auch tatsächlich übereinstimmen (DE-OS 35 03 287). Durch einen solchen Vergleichsvorgang lassen sich zwar die jeweils gleichzeitig oder nahezu gleichzeitig (logisch gleichzeitig) in den beiden Kanälen einer Datenverarbeitungsanlage behandelten Daten auf Übereinstimmung prüfen; ob jedoch alle in den Speicherschaltmitteln der beiden Verarbeitungskanäle abgespeicherten Daten übereinstimmen, läßt sich bisher technisch sinnvoll nur über Prüfprogramme feststellen, durch die alle abgespeicherten Daten nach und nach aufgerufen und auf Übereinstimmung geprüft werden. Dies erfordert einen nicht unerheblichen Zeitaufwand für die Speicherprüfung.

Aufgabe der Erfindung ist es, ein Verfahren nach dem Oberbegriff des Patentanspruches 1 anzugeben, mit dessen Hilfe es möglich ist, zweikanalig abgespeicherte Daten mit möglichst wenig Zeitaufwand auf inhaltliche Übereinstimmung zu überprüfen. Die Erfindung löst diese Aufgabe durch die kennzeichnenden Merkmale des Patentanspruches 1. Vorteilhafte Ausgestaltungen des Verfahrens sind in den Ansprüchen 2 bis 4 angegeben. Einrichtungen zur Durchführung des Verfahrens sind in den Ansprüchen 5 bis 8 offenbart.

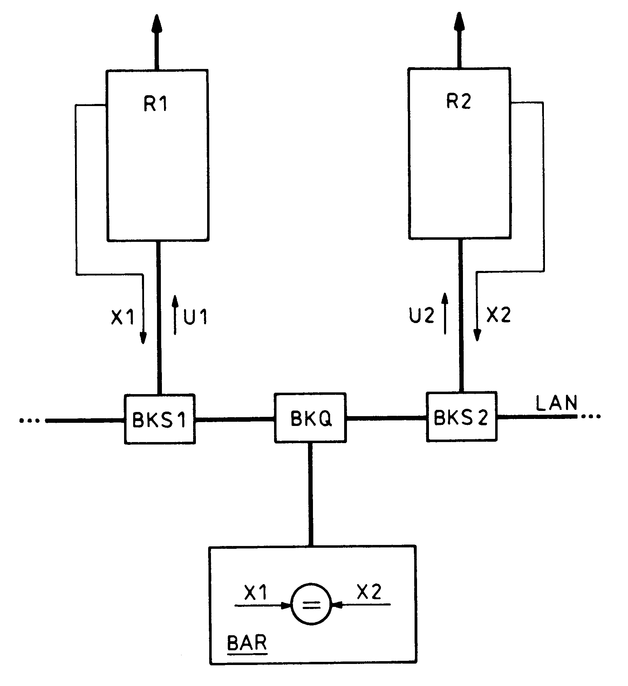

Die Erfindung ist nachstehend anhand eines in der Zeichnung dargestellten Ausführungsbeispieles näher erläutert.

Die Zeichnung zeigt zwei handelsübliche Rechner R1 und R2, in deren nicht dargestellten Speichern inhaltlich übereinstimmende Daten zur Steuerung eines beliebigen Prozesses gespeichert sein sollen. Diese Daten mögen sich z. B. auf die Darstellung eines Betriebsgeschehens auf dem Sichtschirm eines Farbmonitors beziehen. Wie das Prozeßgeschehen auf dem Sichtschirm zur Darstellung gebracht wird und wie mögliche Datenverfälschungen auf dem Wege zwischen den Speichern der Rechner und dem Sichtgeräteschirm erkannt werden, ist nicht Gegenstand der vorliegenden Erfindung. Nicht zum Gegenstand der vorliegenden Erfindung gehört auch die sichere Übertragung der Daten aus einer Datenquelle an die Speicher der beiden Rechner.

Bei den beiden Rechnern handelt es sich vorzugsweise um signaltechnisch nicht sichere Rechner, in deren Speichern hinterlegt ist, welche Prozeßelemente wo darzustellen sind und welche Zustandswerte die einzelnen Prozeßelemente einnehmen sollen. Die Speicher können dabei neben dem tatsächlich zur Anzeige gebrachten Prozeßspiegel auch die Prozeßspiegel weiterer bedarfsweise auf das Sichtgerät aufschaltbarer Prozeßdarstellungen enthalten. Die beiden Rechner R1 und R2 sind über Buskoppelbaugruppen BKS1 und BKS2 an ein Bussystem LAN angeschlossen. Über dieses Bussystem werden sie mit Daten eines signaltechnisch sicheren Rechners BAR versorgt, der zu diesem Zweck über eine Buskoppelbaugruppe BKQ ebenfalls an das Bussystem LAN angeschlossen ist. Der signaltechnisch sichere Rechner BAR versorgt die beiden Rechner R1 und R2 laufend mit inhaltlich übereinstimmenden Nutzdaten U1 und U2, die durch Meldungen vom Prozeß her oder durch Kommandos von einer Eingabeeinrichtung her dargestellt sind.

Solange die in den Speichern der Rechner abgelegten Nutzdaten inhaltlich übereinstimmen und diese Übereinstimmung regelmäßig überprüft wird, kann davon ausgegeangen werden, dß sie das aktuelle Prozeßgeschehen richtig wiederspiegeln. Um diese Übereinstimmung festzustellen, ist vorgesehen, daß die beiden Rechner in vorgegeben maximalen Zeitabständen über alle von ihnen abgespeicherten Nutzdaten U1, U2 nach einem an sich bekannten mathematischen oder sonstigen Abbildungsverfahren ein Prüfdatum X1, X2 bilden und daß diese Prüfdaten auf inhaltliche Übereinstimmung verglichen werden. Diese Prüfdaten beanspruchen auch bei sehr umfangreichem Datenbestand jeweils nur einige wenige Bytes, die leicht miteinander zu vergleichen sind. Aus diesen Bytes lassen sich zwar nicht die ursprünglichen Daten zurückgewinnen; sie sind mit diesen aber über das jeweilige Abbildungsverfahren verknüpft.

Nach einer bevorzugten Ausführungsform der Erfindung werden die aus den in den Rechnern abgespeicherten Daten gebildeten Prüfdaten X1 und X2 über das Bussystem an den signaltechnisch sicheren Rechner BAR oder an einen signaltechnisch sicheren Vergleicher übertragen und dort auf inhaltliche Übereinstimmung überprüft. Man gelangt so zu einer signaltechnisch sicheren Überprüfung der Speicherinhalte der beiden Rechner R1 und R2. Es ist auch möglich, daß die beiden Rechner R1 und R2 die von ihnen ermittelten Prüfdaten untereinander austauschen und vergleichen oder daß sie sie einem externen Rechner oder Vergleicher zum Vergleich zuführen. Ist dieser Rechner oder Vergleicher nicht als signaltechnisch sicherer Rechner oder Vergleicher konzipiert, so ist auch keine signaltechnisch sichere Überprüfung der Speicher gegeben; für sicherheitsunkritische Anwendungen reicht das meist aus. Wenn aber z. B. von der Darstellung der gespeicherten Daten auf einem Sichtgerät sicherheitskritische Kommandos abgeleitet werden sollen, deren Zulässigkeit durch eine Automatik nicht mehr überprüft wird, dann ist eine signaltechnisch sichere Überprüfung des für die Darstellung des Prozeßgeschehens vorgesehenen Rechner-Speicherbereichs zwingend erforderlich, es sei denn, die Darstellung selbst könnte auf andere Weise auf etwaige Darstellungsfehler geprüft werden. Eine signaltechnisch sichere Überprüfung des Datenbestandes der beiden Speicher ist auch möglich unter Verwendung zweier nicht sicherer Rechner, die die ermittelten Prüfdaten auf inhaltliche Übereinstimmung prüfen.

Der nach dem erfindungsgemäßen Verfahren vorgenommene Vergleich der von den beiden Rechnern stammende Prüfdaten hat innerhalb vorgegebener Mindestzeitabstände zu erfolgen, die bestimmt sind durch die zulässige Fehleroffenbarungszeit der Speicher. Das bedeutet, daß im Abstand dieser zulässigen Fehleroffenbarungszeit aus den dann in den Rechnern abgespeicherten Daten Prüfdaten zu ermitteln und miteinander zu vergleichen sind.

Wenn sicherheitskritische Kommandos zur Ausführung anstehen, soll nach einer Fortbildung des erfindungsgemäßen Verfahrens ebenfalls ein Prüfdatenvergleich stattfinden. Der signaltechnisch sichere Rechner BAR sperrt in diesem Fall die Ausgabe dieser Kommandos, bis die beiden Rechner die Prüfdaten über ihren Datenbestand gebildet und diese Prüfdaten im signaltechnischen Rechner oder Vergleicher auf inhaltliche Übereinstimmung geprüft haben. Dabei können die von den beiden Rechnern jeweils nach dem gleichen Algorithmus generierten Prüfdaten in ihrer Darstellungsform durchaus verschieden sein; vorzugsweise können sie invertiert dargestellt sein. Wichtig ist nur, daß die Daten inhaltlich übereinstimmen.

Insbesondere bei einer signaltechnisch sicheren Überprüfung des Datenbestandes zweier Rechner auf inhaltliche Übereinstimmung kann es von Vorteil sein, wenn die beiden Rechner die von ihnen gebildeten Prüfdaten nicht nur einem signaltechnischen sicheren Rechner oder einem signaltechnisch sicheren Vergleicher zuführen, sondern wenn sie diese Daten auch untereinander austauschen und jeweils mit den eigenen Prüfdaten vergleichen. So lassen sich bei etwaigen Übertragungsstörungen zum signaltechnisch sicheren Rechner oder signaltechnisch sicheren Vergleicher über die signaltechnisch nicht sicheren Rechner noch mit hoher Sicherheit Aussagen über den Wahrheitsgehalt der zur Darstellung gebrachten Anzeige machen.

Abweichend von dem vorstehend beschriebenen Ausführungsbeispiel können die beiden Speicher, deren Datenbestand zu prüfen ist, auch durch unterschiedliche Speicherbereiche eines einzigen Speichers dargestellt sein.

Das erfindungsgemäße Verfahren ist auch anwendbar z. B. bei einem 2v3-Rechnersystem; dort werden entweder nur die Speicher der gerade aktiven Rechner auf inhaltliche Übereinstimmung geprüft oder aber alle vorhandenen Speicher, was den Vorteil hat, daß etwaige Speicherfehler auch im jeweiligen Reserverechner frühzeitig erkannt werden.

Das erfindungsgemäße Verfahren ist nicht nur für den vorgenannten Anwendungszweck der Darstellung eines Prozeßgeschehens auf einem Bildschirm mit Vorteil anwendbar, sondern läßt sich grundsätzlich überall dort mit Vorteil einsetzen, wo insbesondere größere, mindestens zweikanalig abgespeicherte Datenmengen über längere Zeit in einem Speicher anstehen. Durch das Reduzieren der der Prüfung unterzogenen Daten zu einem nur wenige Bytes umfassenden Prüfdatum ist der zeitliche Aufwand für den Prüfvorgang außerordentlich gering, so daß er quasi jederzeit vorgenommen werden kann, ohne daß dadurch die Arbeitsfähigkeit der Datenverarbeitungsanlage, deren Speicherinhalt zu überprüfen ist, merkbar belastet wird.

## Patentansprüche

1. Verfahren zur Funktionsprüfung signaltechnisch nicht sicherer Speicher für mindestens zweikanalig abgespeicherte Nutzdaten,
**dadurch gekennzeichnet,**
daß logisch gleichzeitig, aber für jeden Kanal gesondert, in vorgegebenen maximalen Zeitabständen über alle abgespeicherten Nutzdaten (U1, U2) nach einem an sich bekannten mathematischen oder sonstigen Abbildungsverfahren ein Prüfdatum (X1, X2) gebildet wird,
daß diese Prüfdaten (X1, X2) auf inhaltliche Übereinstimmung verglichen werden und
daß nur bei inhaltlich übereinstimmenden Prüfdaten die Auswertung oder Weiterverarbeitung der zugehörigen Nutzdaten zugelassen wird.

2. Verfahren nach Anspruch 1,
**dadurch gekennzeichnet,**
daß der Vergleich der Prüfdaten zeit- und/oder ereignisgesteuert durchgeführt wird.

3. Verfahren nach Anspruch 2,
**dadurch gekennzeichnet,**
daß in einem System zur bedarfsweisen Ausgabe sicherheitskritischer Kommandos die Ausführung solcher Kommandos u. a. von einer im Rahmen der Kommandoausgabe durchgeführten Prüfdatenermittlung mit anschließendem Prüfdatenvergleich abhängig gemacht ist.

4. Verfahren nach Anspruch 2 oder 3,
**dadurch gekennzeichnet,**
daß der maximale zeitliche Abstand für die Ermittlung der Prüfdaten und den Prüfdatenvergleich durch die zulässige Fehleroffenbarungszeit der verwendeten Speicher vorgegeben ist.

5. Einrichtung zur Durchführung des Verfahrens nach einem der Ansprüche 1 bis 4,
**dadurch gekennzeichnet,**
daß die Speicherung der Nutzdaten und die Ermittlung der Prüfdaten (X1, X2) in einem signaltechnisch nicht sicheren Rechnersystem (R1, R2) erfolgt und
daß der Prüfdatenvergleich in einem signaltechnisch sicheren Rechner (BAR) oder signaltechnisch sicheren Vergleicher stattfindet.

6. Einrichtung zur Durchführung des Verfahrens nach einem der Ansprüche 1 bis 4,
**dadurch gekennzeichnet,**
daß die Speicherung der Nutzdaten und die Ermittlung der Prüfdaten in einem signaltechnisch nicht sicheren Rechnersystem erfolgt und
daß der Prüfdatenvergleich in den Rechnern stattfindet, die die Prüfdaten ermitteln, oder in einem dieser Rechner und in einem externen Rechner.

7. Einrichtung nach Anspruch 5,
**dadurch gekennzeichnet,**
daß zusätzlich zum Prüfdatenvergleich auch in den nicht sicheren Rechnern (R1, R2) ein Vergleich der kanalspezifischen Prüfdaten (X1, X2) auf inhaltliche Übereinstimmung stattfindet.

8. Einrichtung nach einem der Ansprüche 5, 6 oder 7,
**dadurch gekennzeichnet,** daß die Nutzdaten, aus denen die miteinander zu vergleichenden Prüfdaten (X1, X2) gebildet werden, in Speicherfeldern eines einzigen oder mehrerer Speicher abgelegt sind.
